(19) Europäisches Patentamt
European Patent Office
Office européen des brevets

(11) EP 1 526 393 A1

(12) EUROPEAN PATENT APPLICATION
published in accordance with Art. 158(3) EPC

(43) Date of publication:
27.04.2005 Bulletin 2005/17

(51) Int Cl.⁷: G02B 6/00, G02B 6/30

(21) Application number: 03771300.5

(86) International application number:
PCT/JP2003/009372

(22) Date of filing: 24.07.2003

(87) International publication number:
WO 2004/011971 (05.02.2004 Gazette 2004/06)

(84) Designated Contracting States:
AT BE BG CH CY CZ DE DK EE ES FI FR GB GR
HU IE IT LI LU MC NL PT RO SE SI SK TR

(30) Priority: 25.07.2002 JP 2002217168

(71) Applicant: Showa Electric Wire and Cable Co.,Ltd.
Kawasaki-shi, Kanagawa 210-0843 (JP)

(72) Inventors:
• MORITA, Kazuaki,
Showa Elec. Wire & Cable Co Ltd
Kawasaki-shi, Kanagawa 210-0843 (JP)

• NAKAMURA, Masahiro,
Showa E. Wire & CableCo Ltd
Kawasaki-shi, Kanagawa 210-0843 (JP)

(74) Representative: Glawe. Delfs. Moll
Patentanwälte
Postfach 26 01 62
80058 München (DE)

(54) OPTICAL FILTER

(57) An SC-type optical PAD connector (4) has a ferrule (6) for accommodating a certain length of an optical fiber (5) which comprises a core containing a light absorbing dopant such as Co or V for adjusting the intensity of the received signal within a permissible range and a photosensitive dopant such as Ge or Sn for selectively reflecting the input light and provided with a chirped grating, which is a periodic modulation structure for the refractive index, in the longitudinally middle portion and a cladding formed outside of the core and having a refractive index smaller than that of the core. The certain length of the optical fiber (5) is protected by the ferrule (6) and fitted in a housing (7) and the connector (4) has one end formed into a male connection terminal and the other end formed into a female connection terminal.

FIG. 3

4 SC TYPE OPTICAL PAD CONNECTOR
6 FERRULE
5 OPTICAL FIBER
7 HOUSING

EP 1 526 393 A1

## Description

Technical Field

The present invention relates to an optical filter having an optical waveguide structure and, more particularly, to an optical filter used in a wavelength division multiplex optical communication system and having a transmitted light level adjusting function, an input light wavelength selecting/reflecting function or a wavelength selecting/blocking function.

Background Art

In the prevailing optical communication system, there is widely adopted the wavelength division multiplex optical transmission system, in which signal lights or test lights having a plurality of wavelengths is superimposed in one optical fiber with a view to realizing a large capacity and a high function of a transmission path.

This system has to be provided on the transmission end with an optical multiplexer for combining a plurality of signal lights and test lights and on the reception end with an optical demultiplexer for separating a plurality of signal lights and test lights or an optical blocking filter for blocking an unnecessary signal light.

In the prevailing optical line, for example, there is practiced an optical fiber line testing system using a test light of a wavelength different from that of a communication light so as to monitor/test the line or system in service. In the prior art, a filter of dielectric multilayer thin films is widely used as the wide-band optical blocking filter which is used in that system for blocking the test light However, this dielectric multilayer thin films has such a drawback as requires complicated adjusting/fixing works to align precisely with the optical at the packaging time. Therefore, the dielectric multilayer thin films is being replaced by the FBG type optical filter, which employs the fiber Bragg grating (as will be called the "FBG") or one mode of the fiber grating (as will be called the "FG") having a refractive grating in the core of the optical fiber. This optical filter is advantageous in that it can be packaged with no adjustment and manufactured at a low cost.

On the reception end, moreover, the signal level permitted by the receiver has an upper limit. There may be needed a optical input level adjuster such as a attenuator so as to adjust the intensity of the signal to enter the receiver within a permissible range. In the optical communication system, an optical fixed attenuator is generally used as the optical input level adjuster. There is known either a metallic thin film type or air gap type optical fixed attenuator, in which a metallic thin film or air gap is formed at an inclination with respect to the core axis so as to attenuate the transmitted signal while inhibiting the reflection in the core or cladding of the optical fiber, or a metal-ion-doped fiber type optical fixed attenuator, in which a light absorbing dopant is added to the core of the optical fiber, Because of a simple structure, a high characteristic stability and a high power resistance, however, the metal-ion-doped fiber type optical fixed attenuator becomes the main current at present.

In the wavelength division multiplex transmission system thus far described, in case the optical blocking filter or the optical fixed attenuator is needed on the reception end, each devices having individual functions are separately manufactured and are connected for use. In this case, the following problems arise.

In the optical communication system of recent years, specifically, the requests for higher densities and lower costs for packaging the devices or instruments are remarkably increasing. Thus, the system of the prior art for connecting a plurality of devices has the following problems.

     a) It is difficult to reduce the packaging space.
     b) It is difficult to lower the cost for manufactures and installations.
     c) The connection points are increased to raise the connection loss furthermore to lower the reliability.

As means for solving the aforementioned problems, it is conceivable to form a connector having an optical attenuating function by combining the FBG built-in SC type optical connector and the metallic thin film type or air gap type optical fixed attenuator. However, the combination of the FBG built-in SC type optical connector and the metallic thin film type or air gap type optical fixed attenuator causes the following drawbacks.

Specifically, the metallic thin film type or air gap type optical fixed attenuator has to form the metallic thin film or air gap generally at the central portion of the optical fiber in a ferrule. This necessity limits the packageable FBG length to about one half of the ferrule so that the degree of freedom for designing the FBG is lowered to make it difficult to give wide-band and high-blocking characteristics.

The present invention has been conceived to solve the problems thus far described, and has an object to provide an optical filter, which has a high degree of freedom for designing the FBG and an optical attenuating function having a wide band and high blocking characteristics, by combining an optical filter such as the FBG built-in SC type optical connector and the metal-ion-doped fiber type optical fixed attenuator.

In order to achieve the aforementioned object, according to the invention, there is provided an optical filter comprising: a core; and a cladding formed on the outer periphery of the core and having a smaller refractive index than that of the core. The core portion contains a attenuating dopant for adjusting the intensity of a received signal within a permissible range and a photosensitive dopant for causing a refractive index change of a long life by the irradiation of an ultraviolet ray; and in that the core portion has a refractive index grating formed for selectively reflecting an input light.

According to the invention, there is also provided an optical filter comprising: a core; and a cladding formed on the outer periphery of the core and having a smaller refractive index than that of the core. The core portion contains a attenuating dopant for adjusting the intensity of a received signal within a permissible range and a photosensitive dopant for causing a refractive index change of a long life by the irradiation of an ultraviolet ray, and the core portion uses an optical fiber having a predetermined length and has a refractive index grating formed for selectively reflecting an input light. And, this optical filter has an adaptability for the standard optical connector.

In the invention thus defined, it is preferred that the refractive index grating for selectively reflecting the input light to the core portion is formed as a chirped grating, in which the grating pitch continuously varies in the axial direction of the core, and it is also preferred that the refractive index grating has an inclining function to the wavelength of the incident light.

Similar effects can be expected even if the refractive index grating is exemplified by the FG (slanted FG, superstructure FG, or long period FG) other than the FBG.

In the invention described above, it is preferred that the light absorbing dopant is made of at least one kind of element selected from transition metallic elements including Co, V, Ni, Ti, Fe, Cr and Mn. It is also preferred that the photosensitive dopant is made of at least one kind of element selected from the elements which belong to the 3B group of the periodic table such as B and Al, the 4B group of the periodic table such as Ge, Sn and Pb, and the 5B group of the periodic table such as N, P and Sb.

The aforementioned photosensitive dopant is contained in the core and also in a cladding formed on the outer periphery of the core, so that the mode coupling from a fundamental mode to cladding modes can be inhibited.

The optical fiber according to the invention can also be protected by means of recoating or hard package (i.e., the method for fixing the optical fiber on a substrate of glass or the like by adhering or soldering it). However, it is preferred that the optical fiber is protected by a ferrule arranged on its outer side. It is also preferred that the optical fiber is accommodated for use in an optical PAD connector having male and female connection terminals formed at its two end portions. In this case, the general versatility can be widened by using the optical PAD connector in the standardized connector such as the SC type optical connector (F04 type optical fiber connector / JISC5973, IEC61754-4), the MU type optical connector (F14 type optical fiber connector / JISC5983, IEC61754-6), the FC type optical connector (F01 type optical fiber connector / JISC5970, IEC61754-13) or the LC type optical connector(Telcordia GR-326-CORE).

Brief Description of the Drawings

Fig. 1 is a sectional view schematically showing one embodiment of an optical filter of the invention.
Fig. 2 is a schematic section showing an optical band blocking function for an input light of one embodiment of the optical filter of the invention.
Fig. 3 is a schematic longitudinal section showing one embodiment of an SC type optical PAD connector using an optical fiber according to the invention.
Fig. 4 is a diagram showing a transmission spectrum of one embodiment of the optical filter according to the invention.
Fig. 5 is a diagram showing a reflection spectrum of one embodiment of the optical filter according to the invention.

Best Mode for Carrying Out the Invention

An embodiment of the invention will be described with reference to the accompanying drawings.

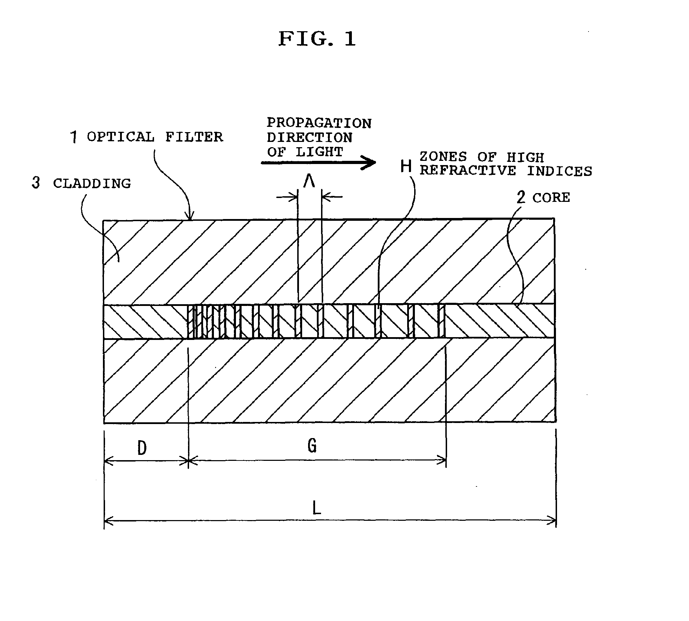

Fig. 1 shows one embodiment of the optical filter of the invention. An optical filter 1 comprises a core 2 and a cladding 3 formed on the outer periphery of the core and having a smaller refractive index than that of the core. This cladding 3 can also be formed to have a two- or three-layer structure. In case the cladding 3 is made of the two-layer structure, the refractive index of the second-layer cladding is made higher than that of the first-layer cladding. In case the cladding 3 is made of a three-layer structure, on the other hand, the refractive index of the third-layer cladding is made lower than that of the second-layer cladding. By forming this refractive index structure, the cladding mode to occur at the connected portion is prevented from being coupled with the fundamental mode, and the cladding mode to occur at the FBG is prevented from being coupled with the fundamental mode thereby to prevent a periodic spectral structure called the "beat" from occurring in the transmission spectrum.

The portion of the core 2 contains at least one kind of light absorbing dopant such as Co or V and at least one kind of photosensitive dopant selected from B, Al, Ge, Sn, Pb, N, P and Sb. The light absorbing dopant is contained to adjust the intensity of a received signal within a permissible range, and the photosensitive dopant is contained to form a refractive grating for selectively reflecting an input light to enter a core portion.

The photosensitive dopant such as Ge can also be contained in the cladding 3 on the core outer periphery to inhibit the occurrence of the cladding mode. In case Ge is used, the refractive index increases. Therefore, a refractive index lowering element such as B or F is contained together in the cladding 3.

At the central portion of the length L of the core 2, there is formed a periodic modulation structure portion G having zones H of high refractive indices. The fiber grating has a function to change a transmission mode for a light having a specific wavelength component. A phase matching condition, as expressed by Formula (1), holds between a refractive index modulation period (as will be called the "grating pitch") of the fiber grating and a propagation constant of an input/output mode.

$$\beta_1 - \beta_0 = 2\pi/\Lambda \qquad (1),$$

$\beta_0$:    Propagation Constant of Input Mode,
$\beta_1$:    Propagation Constant of Output Mode,

and

$\Lambda$:    Grating Pitch.

Therefore, the modes for satisfying the phase matching conditions are made different by the grating pitch and the tilt angle of the grating to the fiber axis. The most representative FBG has a grating pitch of about a wavelength (of the order of 100 nm), and converts a desired wavelength component to propagate the fundamental mode into a fundamental mode of the backward direction by the Bragg reflection. The slanted grating, which is formed with a similar grating pitch by inclining the grating vector with respect to the principal axis of the fiber, exhibits a function to couple the fundamental mode with the cladding mode. If the grating pitch is given an order of 100 $\mu$m, moreover, the grating becomes a long-period grating having a function to convert the fundamental mode into a cladding mode of the forward direction. The invention can be applied to all fiber gratings, but the most important application is to the chirped FBG.

Fig. 1 shows the chirped grating, in which the grating pitch varies so continuously along the axial direction of the core 2 that the periodic modulation structure may cause the Bragg reflection within a specific wavelength range.

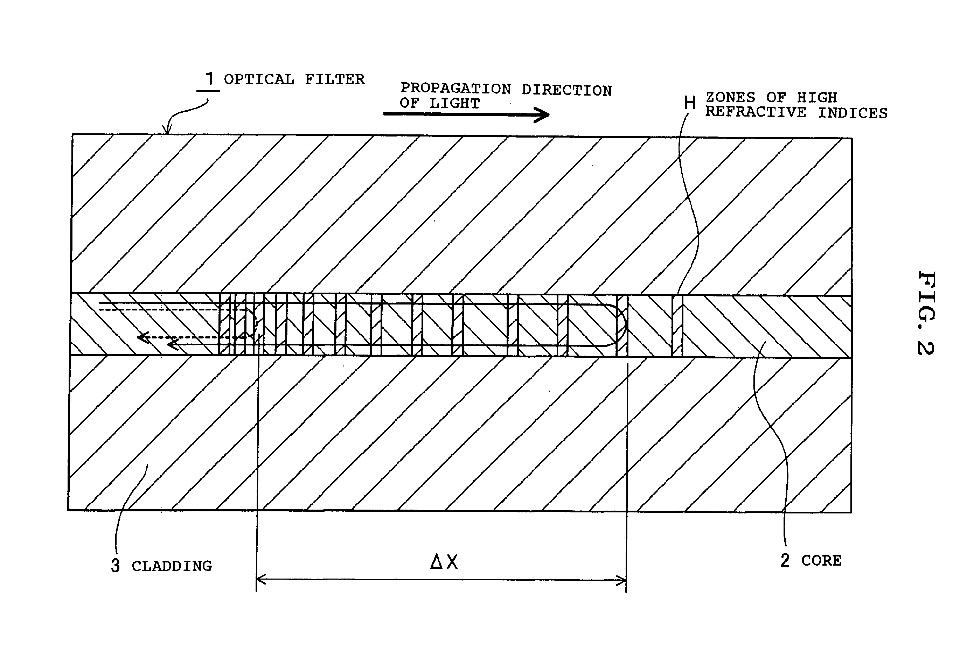

Fig. 2 shows the optical band blocking function of the chirped grating against an input light. The short-wavelength component (of a dotted line) in the band of an input light is reflected on the entrance side of the optical filter 1 having a short grating pitch. On the other hand, the long-wavelength component (of a solid line) in the band of the input light is reflected on the exit side of the optical filter 1 having a long grating pitch. The remaining band components pass as a received signal through the optical filter 1.

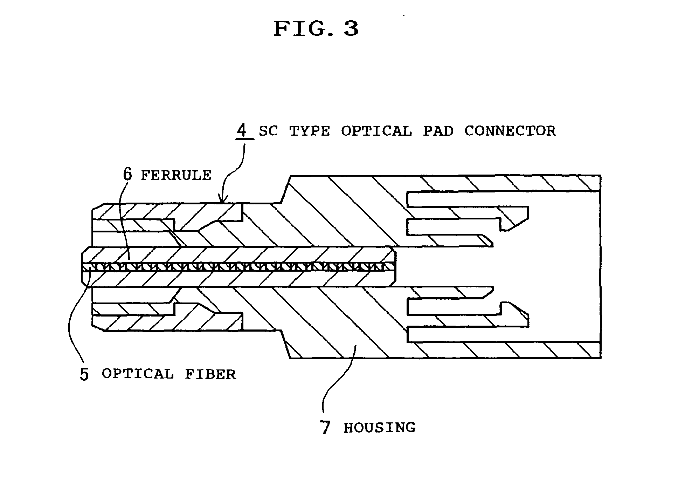

Fig. 3 is a longitudinal section of an SC type optical PAD connector using the optical fiber according to the invention. The SC type optical PAD connector 4 is constructed by fitting an optical fiber 5 (although its cladding is omitted from Fig. 3) basically acting as the aforementioned optical filter, in a housing 7 while being protected over its predetermined length by a ferrule 6. The connector 4 has one end formed into a male connection terminal and the other end formed into a female connection terminal.

[Example]

One example of the invention will be described in the following.

An optical attenuation fiber of a attenuation factor (A) of 0.2 dB/mm was prepared by containing Ge and Co (having a concentration of 6,000 ppm) over the entire length of the core portion of an optical fiber having a core diameter of 8 $\mu$m, a fiber length (L) of 22 mm and a specific refractive index different of 0.3%.

The chirped grating was formed to prepare the optical filter by the phase mask method applying a KrF excimer laser ($\lambda$ = 248 nm) to that optical attenuation fiber. In this chirped grating: the phase mask has a center period ($2\Lambda$) of 1,140 nm; the period has a chirp ratio (C) of 0.5 nm/mm; the chirped FBG has a length (G) of 20 mm; the effective refractive index (N) in the FBG is 1.447; a refractive index modulation is $3 \times 10^{-3}$; and the distance (D) from the incident end of the optical attenuation fiber to the incident end of the FBG is 1.0 mm.

The reflection band width of the FBG of the optical filter thus prepared, the optical path difference and the attenuation difference between the shortest reflection wavelength and the longest reflection wavelength reflected by the FBG, the reflection slope and the maximum reflection factor are as follows:

a) Reflection Band Width

Effective Refractive Index (N) $\times$ Chirp Ratio (C) $\times$

FBG Length (G) = 14.47 nm;

b) Optical Path Difference

2 $\times$ FBG Length (G) = 40 mm;

c) Attenuation Difference

Optical Path Difference (b) $\times$ Attenuation Factor (A) =

8 dB;

d) Reflection Slope

Attenuation Difference (c) / Reflection Band Width (a)

= 0.553 dB/nm; and

e) Minimum Return Loss

2 × Attenuation Factor (A) × Distance (D) to Incident

End of FBG = 0.4 dB.

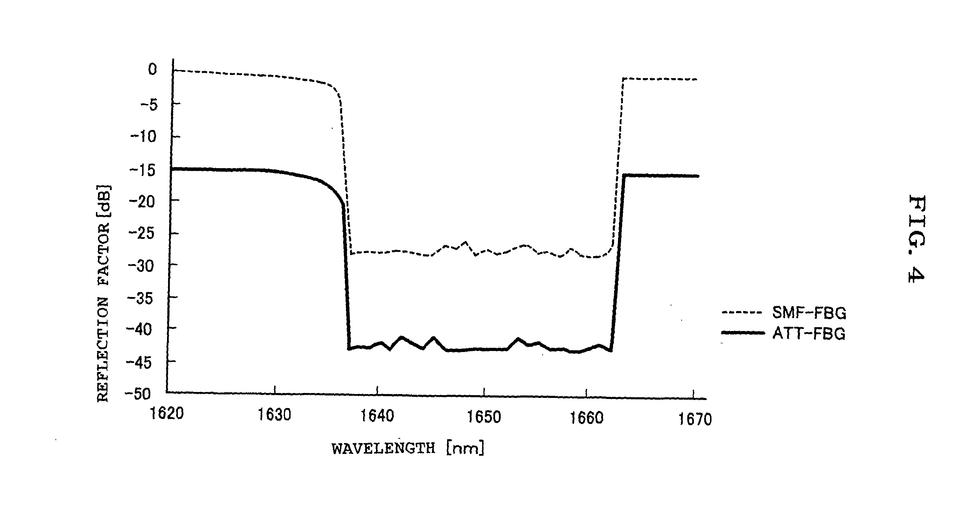

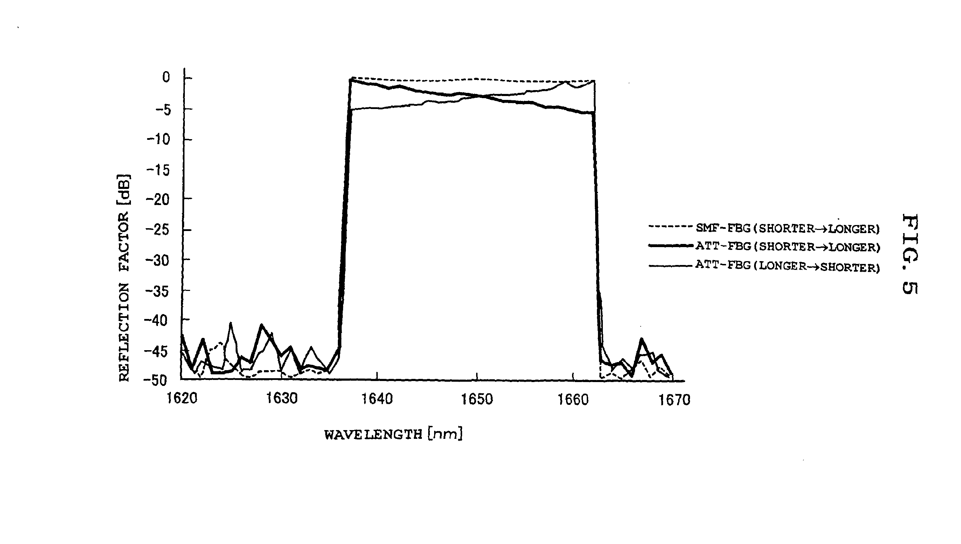

The transmission spectrum of the optical filter, i.e., the relation between the input wavelength (nm) and the transmission factor (dB) is shown in Fig. 4. Moreover, the reflection spectrum, i.e., the relation between the input wavelength (nm) and the reflection factor (dB) is shown in Fig. 5.

In Fig. 4, a dotted curve (SMF-FBG) indicates the single mode FBG fiber containing no light absorbing dopant, and a solid curve (ATT-FBG) indicates the optical filter of the example. In Fig. 5, on the other hand: a dotted curve (SMF-FBG: shorter → longer) indicates the case, in which the light is inputted in the single mode FBG fiber containing no light absorbing dopant from the side of a shorter grating pitch to the longer side; a thick solid curve (ATT-FBG: shorter → longer) indicates the case, in which the light is inputted in the optical filter of the example from the side of the shorter grating pitch to the longer side; and a thin solid curve (ATT-FBG: longer → shorter) indicates the case, in which the light is inputted in the optical filter of the example from the side of the longer grating pitch to the shorter side.

In the chirped FBG having a grating pitch continuously varying in the axial direction of the core, as has been described hereinbefore, different reflection points are made in the FBG in dependence upon the wavelength of the input light, as shown in Fig. 2. As a result, the optical path of the reflected light becomes so different according to the wavelength of the input light that the longer wavelength has the longer optical path.

In the attenuation fiber, on the other hand, the optical path length determines the attenuation so that the reflection spectrum of the chirped grating has an inclining function with respect to the wavelength of an incident light. Specifically, the reflection spectrum of the chirped FBG has wavelength characteristics (or slope), as shown in Fig. 5. In case the input light comes from the side of the shorter grating pitch, the reflection factor on the longer wavelength side becomes lower in the spectral characteristics. In case the input light comes from the side of the longer grating pitch, on the contrary, the reflection factor on the shorter wavelength side becomes lower in the spectral characteristics.

These spectral characteristics can be utilized in the attenuator or the like having the wave characteristics. Specifically, the attenuator is normally demanded to have flat wavelength characteristics. However, the wavelength characteristics may be partially demanded by a gain equalizer (or gain flattening filter) for an optical amplifier. An EDFA (Erbium-Doped Fiber Amplifier) or the like has wavelength characteristics, which are essentially caused by the emission spectral characteristics of the dopant. In this case, there is used a method, by which the wavelength characteristics are offset by the attenuation fiber or the long-period FBG, which is given the wavelength characteristics of the attenuation factor. The optical filter of the invention can be utilized in such applications.

Industrial Applicability

As has been described hereinbefore, the optical filter of the invention has the following advantages by forming the FBG in the metal-ion-doped fiber type optical fixed attenuator.

　　　a) The packaging space can be reduced because the entire length is formed of the single fiber.
　　　b) The long FBG can be packaged to enlarge the degree of freedom for designing the FBG.
　　　c) The composite function can be given merely by changing the fiber structure so that the existing optical parts can be employed as they are without changing the casing or the packaging structure.
　　　d) The connecting points are reduced to lower the connection loss and to improve the reliability.
　　　e) The costs for manufactures and installations can be lowered.

**Claims**

1. An optical filter comprising: a core; and a cladding formed on the outer periphery of said core and having a smaller refractive index than that of said core, **characterized: in that** said core portion contains a damping dopant for adjusting the intensity of a received signal within a permissible range and a photosensitive dopant for causing a refractive index change of a long life by the irradiation of an ultraviolet ray; and **in that** said core portion has a refractive index grating formed for selectively reflecting an input light.

2. An optical filter comprising: a core; and a cladding formed on the outer periphery of said core and having a smaller refractive index than that of said core, **characterized: in that** said core portion contains a damping dopant for adjusting the intensity of a received signal within a permissible range and a photosensitive dopant for causing a refractive index change of a long life by the irradiation of an ultraviolet ray; and **in that** said core portion uses an optical fiber having a predetermined length and has a refractive index grating formed for selectively reflecting an input light.

3. An optical filter as set forth in claim 1 or 2, **characterized in that** the grating vector of the refractive index grating is the Bragg diffraction grating.

4. An optical filter as set forth in any of claims 1 to 3, **characterized in that** said refractive index grating is a chirped grating.

5. An optical filter as set forth in claim 4, **characterized in that** the reflection spectrum of the chirped grating has an inclining function to the wavelength of the incident light.

6. An optical filter as set forth in any of claims 1 to 5, **characterized in that** said damping dopant is made of at least one kind of element selected from transition metallic elements including Co, V, Ni, Ti, Fe, Cr and Mn.

7. An optical filter as set forth in any of claims 1 to 6, **characterized in that** the photosensitive dopant is made of at least one kind of element selected from the elements which belong to the 3B group of the periodic table such as B and Al, the 4B group of the periodic table such as Ge, Sn and Pb, and the 5B group of the periodic table such as N, P and Sb.

8. An optical filter as set forth in any of claims 1 to 7 , **characterized in that** saidphotosensitive dopant is contained in a cladding formed on the outer periphery of the core.

9. An optical filter as set forth in any of claims 2 to 8, **characterized in that** the optical fiber is accommodated in a ferrule in an optical connector.

10. An optical filter as set forth in claim 9, **characterized in that** the optical connector is an optical PAD connector having male and female connection terminals formed at its two end portions.

11. An optical filter as set forth in claim 10, **characterized in that** the optical PAD connector is an SC, MU, FC or LC type PAD connector.

## FIG. 1

1 OPTICAL FILTER

PROPAGATION
DIRECTION
OF LIGHT

ZONES OF HIGH
REFRACTIVE INDICES

3 CLADDING

2 CORE

# FIG. 2

# FIG. 3

4 SC TYPE OPTICAL PAD CONNECTOR

6 FERRULE

5 OPTICAL FIBER

7 HOUSING

# FIG. 4

FIG. 5

<div align="center">

**INTERNATIONAL SEARCH REPORT**

</div>

| | International application No. |
|---|---|
| | PCT/JP03/09372 |

**A.  CLASSIFICATION OF SUBJECT MATTER**
   Int.Cl⁷  G02B6/00, 306

According to International Patent Classification (IPC) or to both national classification and IPC

**B.  FIELDS SEARCHED**

Minimum documentation searched (classification system followed by classification symbols)
   Int.Cl⁷  G02B6/00-6/44

Documentation searched other than minimum documentation to the extent that such documents are included in the fields searched
   Jitsuyo Shinan Koho          1922-1996    Toroku Jitsuyo Shinan Koho      1994-2003
   Kokai Jitsuyo Shinan Koho    1971-2003    Jitsuyo Shinan Toroku Koho      1996-2003

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | EP 783117 A2  (NIPPON TELEGRAPH AND TELEPHONE CORP.),<br>09 July, 1997 (09.07.97),<br>Full text; all drawings<br>& JP 09-184919 A       & JP 09-311221 A<br>& US 5841926 A1 | 1-11 |
| Y | Journal of lightwave technology, 15(8), August 1997, 1464-1469 | 1-11 |
| Y | US 5787213 A2  (Lucent Technologies),<br>03 July, 1996 (03.07.96),<br>Full text; all drawings<br>(Family: none) | 1-11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 October, 2003 (28.10.03) | 18 November, 2003 (18.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 526 393 A1**

<table>
<tr><td colspan="2" align="center">INTERNATIONAL SEARCH REPORT</td><td>International application No.<br>PCT/JP03/09372</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | WO 97/14201 A (BRITISH TELECOMUNICATIONS PLC.), 17 April, 1997 (17.04.97), Full text; all drawings & JP 2000-510602 A & DE 69612104 A | 1-11 |
| A | US 5956442 A1 (NORTHERN TELECOM LTD.), 21 September, 1999 (21.09.99), Full text; all drawings & GB 2295689 A | 1-11 |

Form PCT/ISA/210 (continuation of second sheet) (July 1998)